# EUROPÄISCHE PATENTSCHRIFT

(11) **EP 3 727 780 B1**
(45) Veröffentlichungstag und Bekanntmachung des Hinweises auf die Patenterteilung: **06.09.2023**
(21) Anmeldenummer: 18785938.4
(22) Anmeldetag: 11.10.2018
(51) Int. Cl.: B29C 35/02, B29D 23/00, B29C 33/76, B29C 33/42, B29C 33/46

(54) **VERFAHREN ZUR HERSTELLUNG EINES GEFORMTEN HOHLKÖRPERS UND VORRICHTUNG ZUR DURCHFÜHRUNG DES VERFAHRENS**
METHOD FOR PRODUCING A MOLDED HOLLOW BODY, AND DEVICE FOR CARRYING OUT THE METHOD
PROCÉDÉ DE FABRICATION D'UN CORPS CREUX MOULÉ ET DISPOSITIF POUR LA MISE EN OEUVRE DUDIT PROCÉDÉ

(30) Priorität: 20.12.2017 DE 102017223307
(43) Veröffentlichungstag der Anmeldung: 28.10.2020
(73) Patentinhaber: ContiTech MGW GmbH, 34346 Hann. Münden (DE)
(72) Erfinder: KREIDNER, Harald, 30149 Hannover (DE); BRILL, Hartmut, 30149 Hannover (DE)
(74) Vertreter: Continental Corporation
(86) Internationale Anmeldenummer: PCT/EP2018/077660
(87) Internationale Veröffentlichungsnummer: WO 2019/120668

(56) Entgegenhaltungen:
- DE-A1- 10 354 764
- DE-B3-102007 044 320
- GB-A- 761 212
- GB-A- 892 654
- GB-A- 1 167 146
- US-A- 4 436 690
- US-A- 5 433 902

## Beschreibung

Die Erfindung betrifft ein Verfahren zur Herstellung eines geformten Hohlkörpers aus elastomerem Material.

Hohlkörper, die neben ihrer Basisform weitere Formelemente aufweisen, werden häufig mittels einer Vulkanisationsvorrichtung geformt. Dabei weist ein Vulkanisationswerkzeug die Komplementärform des Fertigteils auf. Ein Rohling, beispielsweise ein extrudierter Schlauchendabschnitt, kann in dem Vulkanisationswerkzeug durch Beaufschlagung mit Druckluft an die Wandung des Werkzeugs gepresst und vulkanisiert werden. Auf diese Weise sind beispielsweise elastische Schläuche mit ringförmigen Wulsten herstellbar.

Mit einem derartigen Verfahren kann jedoch pro Vulkanisationsvorgang nur jeweils eine begrenzte Anzahl von Teilen hergestellt werden, da jedes Teil einen Innendruck erzeugt, der von der jeweiligen Vulkanisationspresse aufzunehmen ist. Daher entscheidet die Schließkraft der Presse über die Menge der zeitgleich herstellbaren Teile, was die Ausbringung einschränken kann.

Die GB 1 167 146 A offenbart ein verfahren gemäß dem Oberbegriff des Anspruchs 1 und eine Vorrichtung gemäß dem Oberbegriff des Anspruchs 4.

Der Erfindung lag daher die Aufgabe zugrunde, ein Verfahren zur Herstellung der genannten Hohlkörper zu schaffen, das eine höhere Ausbringung ermöglicht.

Diese Aufgabe wird durch ein Verfahren gemäß Anspruch 1 gelöst.

Dieses Verfahren erlaubt es, mit einem Vulkanisationsprozess mehrere Hohlkörper auf einmal zu fertigen.

In einer Weiterbildung der Erfindung weist das Verfahren mindestens folgenden weiteren Arbeitsschritt auf, nämlich
c₁) Druckbeaufschlagung der Luftkammern der Dorne mit einem vorbestimmten Innendruck

Die Druckbeaufschlagung kann bei der Abstimmung der Prozesskräfte und der durch die luftdurchlässigen Bereiche der Dorne strömende Luftmenge hilfreich sein.

In einer Weiterbildung der Erfindung weist das Verfahren mindestens folgenden weiteren Arbeitsschritt auf, nämlich
es) Druckanpassung zwischen den Luftkammern der Dorne und dem Autoklaven über einstellbare, in den Dornen angeordnete Druckausgleichselemente.

Auf diese Weise lassen sich die Prozessparameter, beispielsweise Viskosität des elastomeren Materials, und Luftdurchlässigkeit der Wandungsbereiche der Dorne oder die auftretenden Prozesskräfte auch in Abhängigkeit von der Prozesstemperatur gut berücksichtigen und aufeinander abstimmen.

In einer Weiterbildung der Erfindung weist das Verfahren mindestens folgenden weiteren Arbeitsschritt auf, nämlich
f₁) Druckbeaufschlagung der Luftkammern der Dorne, dadurch Durchtritt von Luft durch die luftdurchlässigen Wandungsbereiche aus den Luftkammern zwischen die Dorne und die fertig vulkanisierten Hohlkörper, dabei Bildung eines Luftpolsters zwischen Dornen und Hohlkörpern.

Diese Luftpolster können das Abziehen der Hohlkörper vom Dorn erleichtern.

Die Erfindung betrifft weiter eine Vorrichtung zur Durchführung des oben erläuterten Verfahrens.

Der Erfindung lag dabei die Aufgabe zugrunde, eine Vorrichtung zu schaffen, mit der das eingangs erläuterte Verfahren besonders einfach durchzuführen ist.

Diese Aufgabe wird durch eine Vorrichtung gemäß Anspruch 4 gelöst.

Derartige Dorne haben den Vorteil, dass sie in einem Autoklaven einsetzbar sind, wobei mehrere Dorne gleichzeitig in den Autoklaven einbringbar sind.

Durch die luftdurchlässige Wandung ist Luft, die beim Aufstecken des Rohlings zwischen Dorn und Wand des Rohlings eingeschlossen wird, bei Druckbeaufschlagung des Autoklaven in die korrespondierenden Luftkammern der Dorne pressbar, sodass die Rohlinge an der Komplementärform des jeweiligen Dornes formschlüssig anliegen. Da die fertigen Hohlkörper aus Elastomermaterial sind, lassen sich diese bei vollendeter Vulkanisation und Druckentlastung des Autoklaven vom Dorn wieder abziehen.

In einer Weiterbildung der Erfindung sind die Luftkammern der Dorne mit Druckluft beaufschlagbar.

Nach Abschluss der Vulkanisation und Druckentlastung der Autoklaven kann so Luft durch die entsprechenden luftdurchlässigen Bereiche zwischen den Hohlkörper und den Dorn gepresst werden, wodurch ein Luftpolster zwischen dem Hohlkörper und dem Dorn bildbar ist, so das ein Abziehen der Hohlkörper vom Dorn erleichtert ist.

In einer Weiterbildung der Erfindung weisen die Luftkammern der Dorne einstellbare Druckausgleichselemente auf.

Mittels dieser Druckausgleichselemente ist der Differenzdruck zwischen dem Innendruck in den Luftkammern der Dorne und dem Autoklavendruck einstellbar.

Auf diese Weise ist das Anlegen der Rohlingswand an die Dorne in Abhängigkeit von den sich gegebenenfalls ändernden Prozessparametern einstellbar. Es lässt sich beispielsweise vermeiden, dass das elastomere Material, welches sich bei Beaufschlagung mit Autoklavendruck und Hitze in seiner Viskosität ändert, aufgrund der geregelten Kraft, die auf den Schlauch wirkt, durch die luftdurchlässigen Bereiche der Domwandung in das Innere der Dorne gesaugt wird und dabei die luftdurchlässigen Bereiche der Dorne verstopft.

In einer Weiterbildung der Erfindung sind die Dorne aus mindestens einem Segment luftdichter Wandung und mindestens einem Segment mit luftdurchlässiger Wandung zusammengesetzt, wobei die luftdichten Segmente mit luftdurchlässigen Segmenten in einer vorbestimmten Abfolge axial aufeinanderfolgend angeordnet sind.

Die Segmentierung der Dorne hat den Vorteil, dass die einzelnen Segmente separat herstellbar sind, wobei das jeweilige Fertigungsverfahren auf den Anwendungsfall, nämlich entweder luftdichte oder luftdurchlässige Wandung der Segmente optimierbar ist.

Gemäß der Erfindung sind die Segmente mit luftdurchlässiger Wandung aus einem Sintermaterial ausgebildet.

Sintermaterial hat den Vorteil, dass einerseits die Porosität der Bereiche gut voreinstellbar ist, andererseits diese Materialien auch eine hohe Festigkeit und Temperaturbeständigkeit aufweisen.

Anhand der Zeichnung wird nachstehend ein Ausführungsbeispiel der Erfindung näher erläutert.

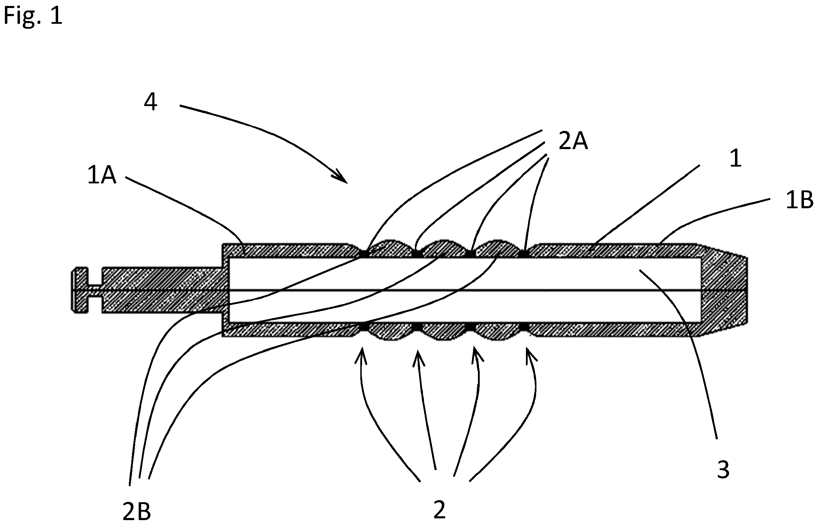

Die Fig. 1 zeigt einen erfindungsgemäßen Dorn 1 mit vier ringförmig umlaufenden Bereichen 2, wobei die Bereiche 2 als Segmente 2A aus einem Sintermaterial ausgebildet sind und eine luftdurchlässige Wandung aufweisen. Die luftdichten Teile des Dornes sind aus Segmenten 2B mit luftdichter Wandung gebildet. Der Dorn 1 wird jeweils durch ein luftdichtes Endstück 1A und 1B axial abgeschlossen.

Der Dorn 1 weist weiter eine Luftkammer 3 auf. Die Luftkammer 3 enthält Luft mit Atmosphärendruck, wobei durch die luftdurchlässigen Bereiche 2 ein Luftaustausch zwischen der Luftkammer 3 und der Umgebung möglich ist.

Der Dorn 1 weist weiterhin eine Formkontur 4 auf.

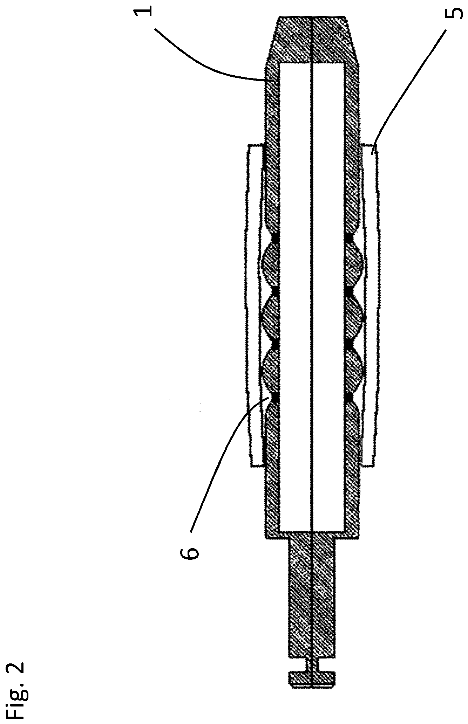

In Figur 2 ist der Dorn 1 mit einem aufgesteckten Schlauchrohling 5 dargestellt. Der Dorn 1 mit Rohling 5 ist in einem hier nicht dargestellten Autoklaven angeordnet. Der Schlauchrohling 5 liegt über der Formkontur 4 des Dorns 1 nicht formschlüssig an, da der Innendruck der Luftkammer 3 und der Druck im nicht gezeigten Autoklaven in dem gezeigten Zustand noch gleich sind. Dadurch ist ein Luftpolster 6 zwischen dem Dorn 1 und dem Rohling 5 eingeschlossen.

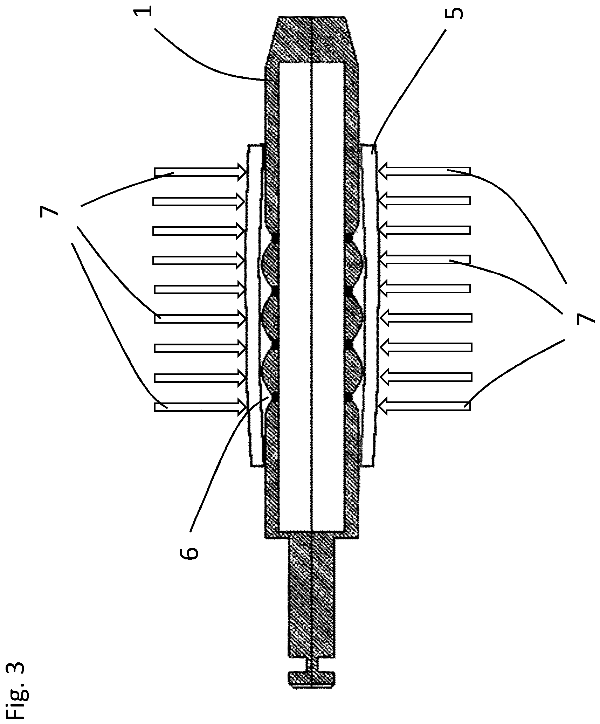

In Figur 3 ist der Dorn 1 mit Rohling 5 und Formkontur 4 in einem Zustand gezeigt, in dem ein durch den nicht gezeigten Autoklaven erzeugter Vulkanisationsdruck, hier durch Pfeile 7 symbolisiert, auf den Rohling 5 einwirkt. Dieser Vulkanisationsdruck 7 soll bewirken, dass der Rohling 5 an die Formkontur 4 des Dorns 1 angepresst wird.

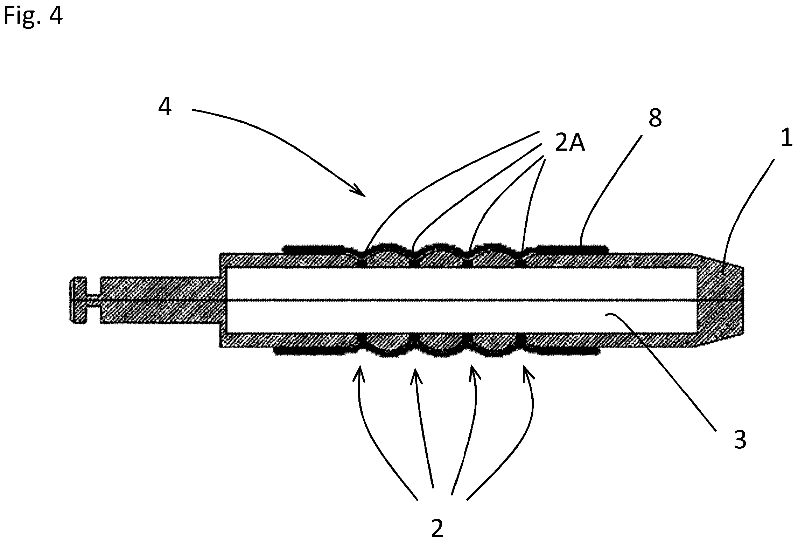

In Fig. 4 ist der Dorn 1 mit einem fertig ausvulkanisierten Hohlkörper 8 gezeigt. Die in dem ursprünglichen, hier nicht mehr vorhandenen Luftpolster vorher eingeschlossene Luft ist durch die Segmente 2A in die Luftkammer 3 verschoben. Durch die im nicht gezeigten Autoklaven herrschenden Druck- und Temperaturverhältnisse ist der Rohling an die Formkontur 4 des Dornes angepresst und zu dem elastischen Hohlkörper 8 mit vorbestimmter, zur Formkontur 4 des Dornes 1 korrespondierender Form fertiggestellt.

### Bezugszeichenliste

### (Teil der Beschreibung)

- 1: Dorn
- 1A, 1B: axiale Endstücke des Dornes 1
- 2: luftdurchlässige Bereiche des Dorns 1
- 2A: luftdurchlässige Segmente des Dorns 1
- 2B: luftdichte Segmente des Dornes 1
- 3: Luftkammer
- 4: Formkontur des Dorns 1
- 5: Schlauchrohling
- 6: Luftpolster
- 7: Vulkanisationsdruck
- 8: vulkanisierter Hohlkörper

## Patentansprüche

1. Verfahren zur Herstellung von geformten Hohlkörpern (8) aus elastomerem Material, wobei das Verfahren mindestens folgende Arbeitsschritte aufweist, nämlich
a) Aufschieben eines vorgefertigten Rohlings (5) auf einen Dorn (1), wobei der Dorn (1) mindestens einen Bereich mit einer Wandung (2) aufweist, die luftdurchlässig ausgebildet ist, und der Dorn (1) mindestens eine Luftkammer (3) aufweist, die mit dem mindestens einen Bereich luftdurchlässiger Wandung (2, 2A) in Wirkverbindung steht,
b) Einbringen des Dorns (1) mit aufgestecktem Rohling (5) in einen an sich bekannten Autoklaven,
c₁) Beaufschlagung des Autoklaven mit Druck und Temperatur, wobei Luft (6), die zwischen dem Rohlingen (5) und dem Dorn (1) eingeschlossen ist, durch die Bereiche luftdurchlässiger Wandung (2, 2A) in die jeweilige Luftkammer (3) gepresst wird, dabei Ausvulkanisation der Rohlinge (5),
d) Entlastung des Autoklaven und Abkühlen
e) Entnehmen des Dorns (1) mit fertig vulkanisiertem und ausgeformtem Hohlkörper (8)
f₂) Abziehen des Hohlkörpers (8) von dem Dorn (1),
**dadurch gekennzeichnet, dass** der mindestens eine Bereich luftdurchlässiger Wandung (2, 2A) als Segment aus einem porösen Sintermaterial ausgebildet ist.

2. Verfahren nach Anspruch 1, **dadurch gekennzeichnet, dass** mindestens folgenden weiteren Arbeitsschritt aufweist, nämlich
c₂) Druckanpassung zwischen der Luftkammer (3) des Dorns (1) und dem Autoklaven über ein einstellbares, in dem Dorn (1) angeordnetes Druckausgleichselement.

3. Verfahren nach Anspruch 1 oder 2, **dadurch gekennzeichnet, dass** das Verfahren mindestens folgenden weiteren Arbeitsschritt aufweist, nämlich
f₁) Druckbeaufschlagung der Luftkammer (3) des Dorns (1), dadurch Durchtritt von Luft durch den oder die luftdurchlässigen Wandungsbereiche (2, 2A) aus der Luftkammer (3) zwischen den Dorn (1) und den fertig vulkanisierten Hohlkörper (8), dabei Bildung eines Luftpolsters zwischen Dorn (1) und Hohlkörper (8).

4. Vorrichtung zur Herstellung eines geformten Hohlkörpers (8), wobei die Vorrichtung mindestens einen Dorn (1) aufweist, auf den ein im wesentlichen schlauchförmig ausgebildetes Rohteil (5) aufsteckbar ist und der mindestens einen Bereich mit einer luftdurchlässigen Wandung (2, 2A) und mindestens eine Luftkammer (3) aufweist, wobei der mindestens eine Bereich mit luftdurchlässiger Wandung (2, 2A) mit jeweils mindestens einer Luftkammer (3) in Wirkverbindung steht und wobei der mindestens eine Dorn (1) die Komplementärform (4) zur vorbestimmten Endgeometrie des Hohlkörpers (8) aufweist,
**dadurch gekennzeichnet, dass** der mindestens eine Dorn axial aus Segmenten zusammengesetzt ist und dass der mindestens eine Bereich luftdurchlässiger Wandung als Segment aus einem porösen Material ausgebildet ist.

5. Vorrichtung nach Anspruch 4, **dadurch gekennzeichnet, dass** die Luftkammer (3) des Dorns (1) mit Druckluft beaufschlagbar sind.

6. Vorrichtung nach Anspruch 4 oder 5, **dadurch gekennzeichnet, dass** die Luftkammer (3) des Dorns (1) ein einstellbares Druckausgleichselement aufweist.

7. Vorrichtung nach Anspruch 4, 5 oder 6, **dadurch gekennzeichnet, dass** der Dorn (1) aus mindestens einem Segment (2B) luftdichter Wandung und mindestens einem Segment (2A) luftdurchlässiger Wandung zusammengesetzt sind, wobei die luftdichten Segmente (2B) mit luftdurchlässigen Segmenten (2A) in einer vorbestimmten Abfolge axial aufeinanderfolgend angeordnet sind.

## Claims

1. Method for producing moulded hollow bodies (8) from an elastomer material, wherein the method comprises at least the following operative steps, specifically:
a) pushing a prefabricated blank (5) onto a mandrel (1), wherein the mandrel (1) has at least one region with a wall (2) which is configured to be air-permeable, and the mandrel (1) has at least one air chamber (3) which is operatively connected to the at least one region with the air-permeable wall (2, 2A);
b) incorporating the mandrel (1) having the blank (5) pushed thereon into an autoclave known per se;
c) impinging the autoclave with pressure and temperature, wherein air (6) which is enclosed between the blank (5) and the mandrel (1) is pressed through the regions with the air-permeable wall (2, 2A) into the respective air chamber (3), while fully vulcanizing the blanks (5) in the process;
d) depressurizing the autoclave, and cooling;
e) retrieving the mandrel (1) having the completely vulcanized and moulded hollow body (8);
f₂) stripping the hollow body (8) from the mandrel (1),
**characterized in that** the at least one region with the air-permeable wall (2, 2A) is configured as a segment made from a porous sintering material.

2. Method according to Claim 1, **characterized in that** the method comprises at least the following further operative step, specifically:
c₂) adapting the pressure between the air chamber (3) of the mandrel (1) and the autoclave by way of an adjustable pressure equalization element disposed in the mandrel (1).

3. Method according to Claim 1 or 2, **characterized in that** the method comprises at least the following further operative step, specifically:
f₂) impinging the air chamber (3) of the mandrel (1) with pressure, resulting in the passage of air through the air-permeable wall region or regions (2, 2A) from the air chamber (3) between the mandrel (1) and the completely vulcanized hollow body (8), while forming an air cushion between the mandrel (1) and the hollow body (8).

4. Device for producing a moulded hollow body 8), wherein the device has at least one mandrel (1) onto which is able to be pushed a blank (9) of a substantially tubular configuration and which has at least one region with an air-permeable wall (2, 2A) and at least one air chamber (3), wherein the at least one region with the air-permeable wall (2, 2A) is in each case operatively connected to at least one air chamber (3), and wherein the at least one mandrel (1) has the complementary shape (4) of the predetermined final geometry of the hollow body (8),
**characterized in that** the at least one mandrel is assembled axially from segments, and **in that** the at least one region with the air-permeable wall is configured as a segment made from a porous material.

5. Device according to Claim 4, **characterized in that** the air chambers (3) of the mandrel (1) are able to be impinged with compressed air.

6. Device according to Claim 4 or 5, **characterized in that** the air chamber (3) of the mandrel (1) has an adjustable pressure compensation element.

7. Device according to Claim 4, 5, or 6, **characterized in that** the mandrel (1) is assembled from at least one segment (2B) with an air-tight wall and at least one segment (2A) with an air-permeable wall, wherein the air-tight segments (2B) and air-permeable segments (2B) are disposed axially in sequence in a predetermined order.

## Revendications

1. Procédé de fabrication de corps creux moulés (8) à partir d'un matériau élastomère, dans lequel le procédé présente au moins les étapes suivantes consistant à
a) emmancher une ébauche préfabriquée (5) sur au moins un mandrin (1), dans lequel le mandrin (1) présente au moins une zone pourvue d'une paroi (2) qui est réalisée de manière perméable à l'air, et le mandrin (1) présente au moins une chambre à air (3) qui est en relation fonctionnelle avec ladite au moins une zone à paroi (2, 2A) perméable à l'air,
b) introduire le mandrin (1) avec l'ébauche (5) emmanchée dans un autoclave connu en soi,
c₁) soumettre l'autoclave à une pression et à une température, dans lequel l'air (6) qui est enfermé entre l'ébauche (5) et le mandrin (1) est comprimé à travers les zones à paroi (2, 2A) perméable à l'air dans la chambre à air (3) respective, avec vulcanisation complète des ébauches (5),
d) détendre l'autoclave, et refroidir,
e) extraire le mandrin (1) avec le corps creux démoulé (8) complètement vulcanisé,
f₂) retirer le corps creux (8) du mandrin (1),
**caractérisé en ce que** ladite au moins une zone à paroi (2, 2A) perméable à l'air est réalisée comme un segment en matériau de frittage poreux.

2. Procédé selon la revendication 1, **caractérisé en ce que** le procédé présente au moins l'étape supplémentaire suivante consistant à
c₂) adapter la pression entre la chambre à air (3) du mandrin (1) et l'autoclave par un élément d'équilibrage de pression réglable, disposé dans le mandrin (1).

3. Procédé selon la revendication 1 ou 2, **caractérisé en ce que** le procédé présente au moins l'étape supplémentaire suivante consistant à
f₁) appliquer une pression à la chambre à air (3) du mandrin (1), ce qui implique un passage d'air à travers la ou les zones de paroi (2, 2A) perméable(s) à l'air à partir de la chambre à air (3) entre le mandrin (1) et le corps creux (8) complètement vulcanisé, avec formation d'un coussin d'air entre le mandrin (1) et le corps creux (8).

4. Dispositif de fabrication d'un corps creux moulé (8), dans lequel le dispositif présente au moins un mandrin (1) sur lequel une ébauche (5) de forme substantiellement tubulaire peut être emmanchée, et qui présente une zone pourvue d'une paroi (2, 2A) perméable à l'air et au moins une chambre à air (3), dans lequel ladite au moins une zone à paroi (2, 2A) perméable à l'air est en relation fonctionnelle respectivement avec au moins une chambre à air (3), et dans lequel ledit au moins un mandrin (1) présente la forme complémentaire (4) à la géométrie finale prédéterminée du corps creux (8),
**caractérisé en ce que** ledit au moins un mandrin est composé axialement de segments, et **en ce que** ladite au moins une zone à paroi perméable à l'air est réalisée comme un segment d'un matériau poreux.

5. Dispositif selon la revendication 4, **caractérisé en ce que** la chambre à air (3) du mandrin (1) peut être soumise à de l'air comprimé.

6. Dispositif selon la revendication 4 ou 5, **caractérisé en ce que** la chambre à air (3) du mandrin (1) présente un élément d'équilibrage de pression réglable.

7. Dispositif selon la revendication 4, 5 ou 6, **caractérisé en ce que** le mandrin (1) est composé d'au moins un segment (2B) à paroi imperméable à l'air et d'au moins un segment (2A) à paroi perméable à l'air, dans lequel les segments imperméables à l'air (2B) sont disposés avec des segments imperméables à l'air (2A) dans une séquence prédéterminée en se suivant axialement.
